# EUROPEAN PATENT APPLICATION

(11) **EP 2 145 867 A2**
(43) Date of publication of application: **20.01.2010**
(21) Application number: 08460043.6
(22) Date of filing: 04.11.2008
(51) Int. Cl.: C04B 7/44

(54) **Method of continuous processing of power raw materials to post-pyrolsis hydrocarbons in association with production of construction materials**

(30) Priority: 03.04.2008 PL 38484308
(71) Applicant: Sukiennik, Zdzislaw, Lodz (PL)
(72) Inventor: Sukiennik, Zdzislaw, Lodz (PL)
(74) Representative: Dziubinska, Jolanta

(57) **Abstract**

Method of continuous processing of power resources to post-pyrolysis hydrocarbons in association with the production of construction materials is characteristic by the fact that construction material produced in burning process of temperature close to sintering point is introduced in parallel flow with energy raw materials by means of equipment (4) ensuring required tightness and is subject to decomposition with the utilization of heat given up by hot construction material during dislocation of components in the equipment (8), while solid and gas fraction are separated to construction aggregate and volatile hydrocarbons which are fractionated in condensing process to volatile gasses and liquig fraction and non-condensed gasses are directed to burning of construction materials while out dropped hydrocarbon fractions are transported to storage tanks and / or subject to further processing. The energy raw material subject to pyrolysis process can be preliminarily heated with flue gasses from burning of construction material. The hard condensable gasses from pyrolysis are used for burning of construction materials and / or heating of energy raw material.

## Description

The subject of the invention is a method of continuous processing of power raw materials to post-pyrolysis hydrocarbons in association with the production of construction materials and especially their processing connected with the production of such materials as building aggregate, mineral sinters etc. Waste plastics, rags, wood, cellulose, brown coal, hard coal, mazout, different sludge especially coming from waste treatment plants, polluted earth, biomass - as renewable energy source - can be used as power resources. Processed waste may be in solid or liquid state, shredded or not.

There are known many methods of processing of different wastes. Management of more and more amounts of wastes is necessary due to long decomposition period of their considerable part as well as bigger and bigger dumping grounds. There are known methods of wastes utilization in the production of energy sources in the process of their combustion. There are also known various methods of processing of plastic wastes, rags, waste wood or earth polluted with fuel. Processing of plastic wastes aiming at using them for the production of initial monomers is most beneficial economically and ecologically and is characterized by least number of disadvantages. Advantageous are methods which allow receiving, in result of decomposition processes, a mixture of hydrocarbons of chain length C₁ to C₂₄, in which most advantageous is fraction C₄ to C₂₄, used for the production of engine fuels. There are also known methods of pyrolysis of plastics and other power raw materials with the purpose to process them to energy sources. There is also known thermal cracking of waste raw materials and receiving a product of composition close to engine fuels.

There are known methods of producing keramzyte burned in kilns with gas or other fuels. Burned keramzyte of sintering point after cooling is directed to silos or on dump heaps. Heat generated during keramzyte production is recovered in a slight degree and the rest is irretrievably lost.

The method of continuous processing of power resources to post-pyrolysis hydrocarbons in association with the production of construction materials is characterized by the fact that construction material produced in a burning process in temp. close to sintering point is introduced in parallel flow with power raw materials by means of equipment ensuring required tightness, is decomposed using the heat given up by burned construction material during displacing of components in the equipment and then solid and gas fraction is separated to construction aggregate and volatile hydrocarbons which are fractionated in a condensing process to volatile gases and liquid fraction, non-condensed gases are directed to burning of construction materials while outdropped hydrocarbon fractions are directed to storage tanks and / or further processing.

In the method according to the invention power raw material subject to pyrolysis may be preliminarily heated with flue gases from burning process of construction materials. In the method according to the invention hard condensable gases generated in pyrolysis may be utilized for burning of construction materials and / or heating of power raw material.

In a solution according to the invention there is utilized heating with hot construction materials leaving the furnace, introduced to pyrolyser in parallel flow to power raw materials. The idea of the solution is the production technology of construction material especially construction aggregate with simultaneous utilization of heat energy contained in generated hot construction material which is introduced to pyrolyser. In the pyrolysis process of waste power raw materials there is utilized heat contained in burned construction material which in the conditions of conducted process causes breaking of hydrocarbon chains receiving a wide fraction of hydrocarbons of chain length from C₁ to C₂₄. Energy sources obtained in different stages of the process are used in this process among other things for aggregate burning, heating of waste raw materials introduced to pyrolyser.

In a solution according to the invention in a rotary kiln or other equipment construction materials are produced by burning. The process takes place in a temperature which guarantees appropriate sintering of produced construction materials such as light aggregate, sinters or other mineral materials. Hot construction material from the burning or heating equipment is transported to pyrolizer continuously or periodically by a device ensuring required tightness to which in a parallel flow waste energy raw materials are introduced in from of foil, wood, cardboard or rags, polluted earth, biomass e.g. energy willow, straw, waste plastics etc. Waste raw materials may be shredded and preliminarily baked.

In a pyrolyser without air access or additional source of heat takes place pyrolysis of introduced waste raw materials. In pyrolysis there is utilized heat of hot construction material from a rotary kiln or other baking equipment. Hot burned construction material which is an energy carrier displaced with waste energy raw materials in pyrolyser, giving up heat decomposes the waste product, which is introduced at the same time, to a mixture of compounds. From the pyrolyser ceramic aggregate is moved to a chamber of pyrolysis gases and construction materials. Aggregate and gas fraction are separated. Aggregate is sent for further cooling by means of equipment which ensure required tightness of pyrolyser. Polluted pyrolysis gasses are sent to fractionation from which gasses, after passing through a heat exchanger, are condensed in form of liquid hydrocarbons or being in gas form may be used in technological process. Fractionation may be carried out in one or a series of fractionating equipment to separate individual fractions depending on the applied cooling temperature. Dust with tar and others can be emitted. Dusts and tars may be returned to the beginning of the process. Waste raw materials can be introduced to pyrolyzer continuously or periodically.

Waste raw materials introduced to pyrolysis kiln are heated preliminarily with flue gasses generated in the process of burning construction materials in the kiln. These raw materials are introduced continuously or periodically which ensures pyrolyser tightness. The pyrolysis process of waster energy raw materials is conducted continuously or periodically. The control of pyrolysis process depends on the amount of introduced construction materials from the first kiln and energy raw materials and possibly their preliminary heating. Hot construction material of a considerable contact surface introduced to pyrolyser accelerates the rate of thermal reaction, shortens time of breaking long hydrocarbon chains of introduced energy raw materials. The temperature of construction material leaving the kiln in which the burning process takes place cannot be lower than the temperature of energy raw materials decomposition in the pyrolysis process to enable oil fraction polluting construction material.

The temperature of construction materials leaving the pyrolyser is lower from their inlet temperature to this equipment.

Conducting the process according to the invention waste energy raw materials are processed in association with the production of construction aggregates at the same time obtaining sources of energy partly used in this process. In pyrolyzer heat of the introduced hot construction material is utilized. Raw materials subject to the process of pyrolysis can be shredded. Depending on the temperature of pyrolysis process, kind of supplied materials and duration of pyrolysis different fractions of liquid or gas hydrocarbons are obtained. Hot gaseous products leaving pyrolyzer are fractionated by multi stage cooling to liquid or gas fractions. These raw materials can be used in thermal processes of this technology, in other production processes or for commercial use. In the pyrolysis process from waste raw materials quick coke may be produced; it can be separated by known methods. Quick coke may be used for the production of aggregates.

Steam, hot water and air, which are produced in the cooling stage of gas fraction, may be used in the mill technological process. Gasses leaving outlet chamber of pyrolysis gasses and construction materials can be cooled to ambient temperature getting volatile, solid and liquid fraction.

Acting according to the invention we do not generate waste products. In the technology there is utilized heat contained in produced materials and / or flue gases during burning of construction materials especially aggregates or mineral sinters. Possible pollutions that may be introduced with raw materials may be separated or remain in construction material.

Energy generated in different stages of the process is in form of flue gas, hot water and steam. This energy can be utilized in widely known solutions for different technological needs in the plant ( e.g. heating, production of steam or hot water or air). Heat energy in a solution according to the invention can be obtained in every stage of the process.

Process safety is guaranteed by high enough temperatures of hot construction materials introduced to pyrolyser which make impossible collection of oxygen in undesired concentrations. Oxygen, that may be introduced especially with waste materials, can be incinerated in pyrolyzer. The process is safe due to hot construction materials introduced to pyrolyzer and high temperature of the process.

The control of pyrolysis process is possible by proper selection of the quantity of introduced components according to their inlet temperatures.

In the method according to the invention different kinds of equipment, which guarantee safe run of the process, can be used. Both kiln and pyrolyzer may, owing to their construction, guarantee correct processes e.g. stoker furnace, pyrolyzer in from of a tank with internal agitator.

Following the method according to the invention hot construction materials and energy raw materials can be introduced to pyrolyzer periodically.

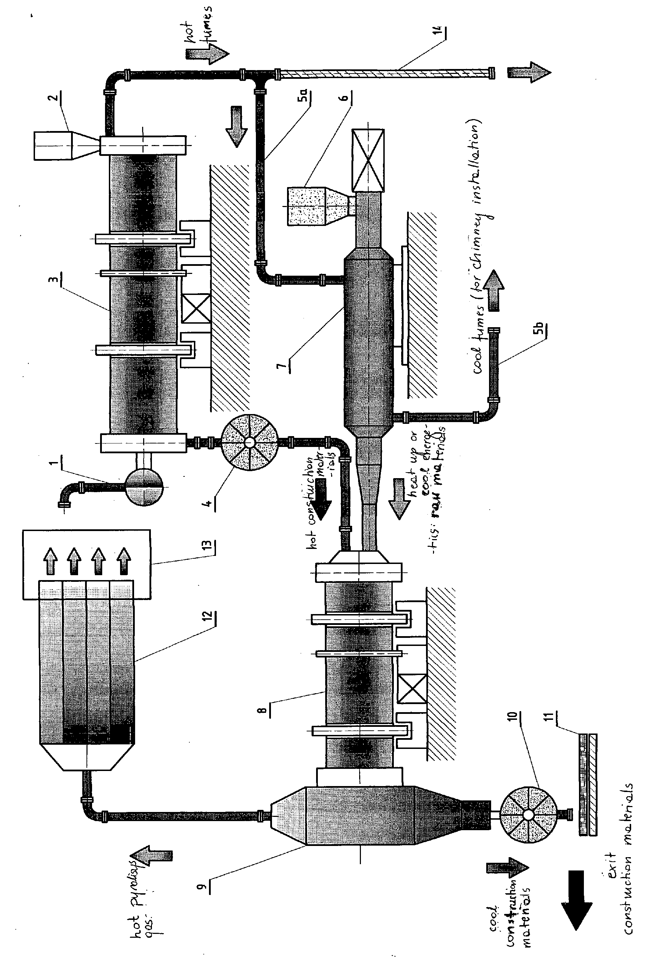

The solution according to the invention was presented as an example on the drawing in which 1 means burner or other source of heat energy, 2 - charge of building semi-products , 3 - rotary kiln, 4 - sealing and feeding equipment, 5a, 5b - discharge of flue gasses, 6 - charge of energy raw materials, 7 - energy raw materials heating unit, 8 - rotary pyrolyzer, 9 - outlet chamber of pyrolysis gases and construction materials, 10 - sealing and receiving equipment, 11 - construction material after-cooling system with a possibility of heat energy recovery, 12 - cleaning, cooling and partial condensing of pyrolysis gasses, 13 - separated hydrocarbon fractions, 14 - alternative outlet of hot flue gasses to chimney system omitting heating installation or to be used in other heat recovery installations, A - stream of hot construction material.

### Example 1

In rotary kiln (3) granules of swelling clay are burned by a burner (1) using any source of energy in sintering temperature i.e. approx. 800 to 1300°C receiving hot construction material in form of keramzyte. Burnt product by stream A through a chute by means of cell (4) sealing and feeding device is introduced to rotary pyrolyzer (8).

Independently in parallel flow in a continuous way shredded plastics, preliminarily heated in the heating system (7) for energy raw materials with flue gasses from rotary kiln, are introduced to pyrolyzer (8) from tank (6) by screw device.

Energy raw materials preliminarily heated with heat of flue gasses from rotary kiln improve energy balance of the process.

In rotary pyrolyzer (8) without air access, by mixing hot granules with plastic mass preliminarily heated with flue gas from construction materials burning, takes place pyrolysis of introduced wastes. At the outlet from pyrolysis kiln keramzyte and post-pyrolysis gasses are directed to outlet chamber (9) from which keramzyte by cell (10) sealing and receiving equipment, which ensure required tightness of pyrolysis system, is directed for cooling (11) with a possibility of recovery of heat energy and then stored in warehouse. Post-pyrolysis gasses from outlet chamber (9) are fractionated in cleaning, cooling and partly condensing system (12) to separate first of all heavy and polluted with dust fractions, lighter hydrocarbon fractions for possible further cleaning. Gasses containing hydrocarbons of chain length from C₁ to C₄ remaining after fractionation are directed for incineration in rotary kiln burner (1) for burning of construction material. Intermediate hydrocarbon fractions may be used for commercial purpose or in other processes. Fractionation can take place in one or a series of fractionating equipment depending on the applied cooling temperature. Heavy substances precipitated in the first stage are directed to the beginning of light aggregate production process thus improving energy balance.

### Example 2

Following the procedure described in example 1 hot construction material in form of sinters and shredded cellulose wastes is introduced to pyrolyzer. Both hot construction material and pyrolysis products are transported by screw device ensuring required tightness of the technological system.

### Example 3

Following the procedure described in example 1 or 2 the mixture of brown and hard coal is subject of pyrolysis in the presence of hot construction material. Gas fractions received during pyrolysis from separating device are directed to incineration in gas turbine with current generator and process steam.

### Example 4

Following the procedure described in example 1 stoker furnace and pyrolyzer with internal agitator are used. Sludge from effluent treatment plant is subject to pyrolysis process. Sludge is introduced to sealing and feeding equipment by means of pressing device.

### Example 5

Following the procedure described in example 1 hot building material and energy materials are introduced to pyrolyzer by means of a piston device and non-condensed gasses from pyrolysis are utilized in energy production process.

### Example 6

Following the procedure described in example 1 technological process is run periodically adhering to the principle that heat energy carriers and energy materials are introduced in solid state ensuring required tightness of the system.

### Example 7

Following the invention technological process is run continuously adhering to the principle that heat energy carriers and energy materials are introduced in liquid state ensuring required tightness of the system.

### Example 8

Following the invention gasses generated in pyrolyzer are taken away from the process before filtering as energy material and are processed directly to electric current , steam, heated air or warm water.

## Claims

1. Method of continuous processing of power resources to post-pyrolysis hydrocarbons in association with the production of construction materials in a process of burning of construction materials and pyrolysis of energy raw materials, fractionation of the products characteristic by the fact that construction material produced in burning process of temperature close to sintering point is introduced in parallel flow with energy raw materials by means of equipment (4) ensuring required tightness and is subject to decomposition with the utilization of heat given up by hot construction material during dislocation of components in the equipment (8), while solid and gas fraction are separated to construction aggregate and volatile hydrocarbons which are fractionated in condensing process to volatile gasses and liquig fraction and non-condensed gasses are directed to burning of construction materials while out dropped hydrocarbon fractions are transported to storage tanks and / or subject to further processing.

2. Method according to claim 1 **characterized by** the fact that energy raw material subject to pyrolysis process can be preliminarily heated with flue gasses from burning of construction material.

3. Method according to claim 1 **characterized by** the fact that hard condensable gasses from pyrolysis are used for burning of construction materials and / or heating of energy raw material.
